# EUROPEAN PATENT APPLICATION

(11) **EP 4 737 499 A1**
(43) Date of publication of application: **06.05.2026**
(21) Application number: 24831911.3
(22) Date of filing: 24.06.2024
(51) Int. Cl.: C08G 59/20, H02K 3/34

(54) **CURABLE EPOXY COMPOSITION FOR DYNAMO-ELECTRIC MACHINES**

(30) Priority: 30.06.2023 JP 2023108870
(71) Applicant: Daicel Corporation, Osaka-shi, Osaka 530-0011 (JP)
(72) Inventor: MIKI, Ayano, Tokyo 108-8230 (JP)
(74) Representative: Grünecker Patent- und Rechtsanwälte PartG mbB
(86) International application number: PCT/JP2024/022860
(87) International publication number: WO 2025/005051

(57) **Abstract**

An object of the present disclosure is to provide a curable epoxy composition for a rotatory electric machine that can easily adhere to PEEK resin and can suppress delamination during use. The epoxy composition for a rotatory electric machine of an embodiment of the present disclosure contains an epoxy compound (A), an acid anhydride-based curing agent (B), and an amine-based curing accelerator (C), is liquid at 25°C, and has a viscosity at 25°C of 3000 mPa·s or less and an adhesive strength to PEEK resin of 2.5 N/cm² or more when cured. In the curable epoxy composition for a rotatory electric machine, a viscosity increase rate before and after a storage test performed under conditions of a temperature of 23 ± 5°C and a humidity of 50 ± 5% for 41 days is preferably 20000% or less.

## Description

### Technical Field

The present disclosure relates to a curable epoxy composition for use in rotatory electric machines. More particularly, in an embodiment, the present disclosure relates to a curable epoxy composition for forming a cured product for use in a stator or rotor in rotatory electric machines. The present application claims priority to Japanese Patent Application No. 2023-108870 filed in Japan on June 30, 2023, the content of which is incorporated herein by reference.

### Background Art

Epoxy resins are used as a resin (encapsulating material) for encapsulating an optical semiconductor element in an optical semiconductor apparatus, a resin for molded coil applications in which a coil such as an ignition coil is impregnated and casted, a resin for fiber reinforcement, a resin for a rotatory electric machine (such as an insulating material, an adhesive resin for fixation of a permanent magnet, or a filler for a gap), and the like (for example, see Patent Documents 1 to 2).

In particular, a polyamide-imide resin having high heat resistance has been used as an insulating layer of a winding for a rotatory electric machine, but as a measure for high voltage resistance (PDIV) in order to achieve, for example, high-speed charging, Replacement of the insulating layer made of the polyamide-imide resin with a PEEK resin having higher voltage resistance is in progress.

### Citation List

### Patent Document

Patent Document 1: JP 2017-199566 A
Patent Document 2: JP 2021-183687 A
Patent Document 3: JP 2020-524190 T

### Summary of Invention

### Technical Problem

However, the PEEK resin has a problem in adhesion properties to the epoxy resin due to the properties of the PEEK resin. There has been proposed a method for improving the composition of the PEEK resin to improve adhesion properties to the epoxy resin, as in Patent Document 3, but the method is insufficient. Therefore, when subjected to motor vibration, delamination occurs between the epoxy resin and the PEEK resin, and the delaminated epoxy resin and a winding, or windings themselves repeatedly collide with each other in association with the motor vibration, which causes wear of the PEEK resin protecting the winding, and thus, insulating properties are deteriorated.

Accordingly, an object of the present disclosure is to provide a curable epoxy composition for a rotatory electric machine, which can easily adhere to the PEEK resin and can suppress delamination during use.

### Solution to Problem

As a result of intensive studies to achieve the above object, the inventor of the present disclosure has found that a curable epoxy composition for a rotatory electric machine, the curable epoxy composition containing an epoxy compound, an acid anhydride-based curing agent, and an imidazole-based curing accelerator and exhibiting a specific viscosity and an adhesive strength, can easily adhere to PEEK resin and can suppress delamination during use. The present disclosure relates to what has been completed based on these findings.

The present disclosure provides a curable epoxy composition for a rotatory electric machine, the curable epoxy composition containing an epoxy compound (A), an acid anhydride-based curing agent (B), and an amine-based curing accelerator (C), the curable epoxy composition being liquid at 25°C, and having a viscosity at 25°C of 3000 mPa·s or less and an adhesive strength to PEEK resin of 2.5 N/cm² or more when cured.

The curable epoxy composition for a rotatory electric machine is liquid at 25°C, and has a viscosity at 25°C of 3000 mPa·s or less, and thus has excellent impregnation properties and enables easy adhesion while suppressing defects. When the curable epoxy composition has an adhesive strength to PEEK resin of 2.5 N/cm² or more when cured, the composition can exhibit sufficient adhesive strength to PEEK resin.

The curable epoxy composition for a rotatory electric machine preferably has a viscosity increase rate of 20000% or less before and after a storage test performed under conditions of a temperature of 23 + 5°C and a humidity of 50 + 5% for 41 days. Due to the above configuration, the curable epoxy composition has excellent long-term stability and handleability.

The curable epoxy composition for a rotatory electric machine preferably has a glass transition temperature of 170°C or higher when cured. Due to the above configuration, the curable epoxy composition can easily exhibit sufficient heat resistance.

The present disclosure also provides a cured product of the curable epoxy composition for a rotatory electric machine.

The present disclosure also provides a stator for a rotatory electric machine, the stator including the cured product and the cured product being formed in a manner covering a stator coil.

The present disclosure also provides a rotor for a rotatory electric machine, the rotor including the cured product, the cured product covering a winding of the rotor.

### Advantageous Effects of Invention

According to the curable epoxy composition for a rotatory electric machine according to one embodiment of the present disclosure, the curable epoxy composition can easily adhere to the PEEK resin, and can suppress delamination during use.

### Description of Embodiments

### [Curable Epoxy Composition]

The curable epoxy composition for a rotatory electric machine according to an embodiment of the present disclosure (hereinafter, sometimes referred to as "curable epoxy composition") is a curable (thermosetting) composition that contains at least an epoxy compound (A), an acid anhydride-based curing agent (B), and an amine-based curing accelerator (C), is liquid at 25°C, has a viscosity at 25°C of 3000 mPa·s or less, and has an adhesive strength to PEEK resin of 2.5 N/cm² or more when cured.

The curable epoxy composition preferably contains a polyester polyol (D). When the polyester polyol (D) is blended, the cured product obtained by curing the curable epoxy composition has a high glass transition temperature, and at the same time, excellent flexibility and further improved bending strain. Thus, the cured product of the curable epoxy composition has further improved heat resistance. Furthermore, the curable epoxy composition may include an inorganic filler (E). Blending the inorganic filler (E) can impart thixotropy to the composition, thus suppressing sedimentation of a powder that may be included in the composition, and blending the inorganic filler (E) can also impart a low linear expansion to the cured product.

The curable epoxy composition is liquid at 25°C, and thus is enhanced in workability such as impregnation properties and casting properties. The viscosity at 25°C of the curable epoxy composition is preferably 3000 mPa·s or less, preferably 2000 mPa·s or less, more preferably 1500 mPa·s or less, and still more preferably 1000 mPa·s or less. When the viscosity is 3000 mPa·s or less, the long-term stability is enhanced, the impregnation properties and the workability during casting can be improved, and the occurrence of a defect due to defective casting can be reduced in the cured product. The lower limit value is preferably 100 mPa·s or more, more preferably 200 mPa·s or more, and still more preferably 300 mPa·s or more. When the viscosity is 100 mPa·s or more, the composition does not drip off after impregnation, and the workability during impregnation and casting tends to be improved. The viscosity at 25°C of the curable epoxy composition can be measured, for example, under conditions of a rheometer (product name "Modular Compact Rheometer, MCR302", available from Anton Paar GmbH, rotor diameter: 25 mm, sample thickness: 0.1 mm).

The curable epoxy composition preferably has a viscosity increase rate at 25°C of 20000% or less, more preferably 3000% or less, further preferably 5000% or less, and particularly preferably 400% or less, before and after a storage test performed under conditions of a temperature of 23 ± 5°C and a humidity of 50 ± 5% for 41 days. When the viscosity increase rate is 20000% or less, the curable epoxy composition can suppress viscosity increase over a long period of time, and is enhanced in long-term stability and handleability. The lower limit is not particularly limited, but may be 80 mass% or more.

The curable epoxy composition has an adhesive strength to PEEK resin of 2.5 N/cm² or more, preferably 2.7 N/cm² or more, and more preferably 2.9 N/cm² or more, when cured. When the adhesive strength is 2.5 N/cm² or more, sufficient adhesive strength to the PEEK resin can be exhibited, and delamination from the PEEK resin can be suppressed. The upper limit value is not particularly limited, but may be 10 N/cm² or less. In an embodiment of the present disclosure, the adhesive strength is a value measured by a die shear test in which a joint portion consisting of a cured product of the curable epoxy composition is pressed with a bonding tester (product name "4000pxy DS100", available from Nordson DAGE) and a load [N] at the time of fracture is calculated. The die shear test is performed on a cured product (joint portion) obtained by applying the curable epoxy composition onto a PEEK resin, stacking a chip thereon, and subjecting the stacked product to curing. Curing conditions for the cured product can be appropriately selected depending on the composition of the curable epoxy composition. For example, the die shear test is performed on a cured product cured under at least one condition among conditions of a temperature of from 80 to 180°C and a time of from 60 to 300 minutes. The die shear test can be performed more quickly and conveniently than a known method for evaluating adhesion, and can provide a reduced repeatability error even for a substrate having low smoothness or a low-viscosity resin.

The glass transition temperature of the curable epoxy composition when cured is preferably 170°C or higher, more preferably 174°C or higher, still more preferably 180°C or higher, and particularly preferably 200°C or higher. When the glass transition temperature is 170°C or higher, the heat resistance is enhanced even when the environment temperature, such as the working environment temperature of an EV motor, is a high temperature. The glass transition temperature of the cured product is a value measured by a differential scanning calorimeter (DSC).

### (Epoxy Compound (A))

The epoxy compound (A) is a compound having one or more epoxy groups (oxirane rings). Examples of the epoxy compound (A) include an alicyclic epoxy compound (alicyclic epoxy resin), an aromatic epoxy compound (aromatic epoxy resin), and an aliphatic epoxy compound (aliphatic epoxy resin). In particular, the epoxy compound (A) is preferably an alicyclic epoxy compound. A single type of the above epoxy compound (A) may be used, or two or more thereof may be used.

As the alicyclic epoxy compound, a well-known or commonly used alicyclic epoxy compound can be used. Examples of the alicyclic epoxy compound include, but are not particularly limited to, (I) a compound having an epoxy group (referred to as "alicyclic epoxy group"), which is a group composed of two adjacent carbon atoms and an oxygen atom that constitute an alicyclic ring in the molecule; (II) a compound in which an epoxy group is directly bonded to an alicyclic ring through a single bond; and (III) a compound having an alicyclic ring and a glycidyl ether group in the molecule (a glycidyl ether type epoxy compound).

Examples of (I) the compound having an alicyclic epoxy group in the molecule include compounds having a cyclohexene oxide group, such as compounds represented by Formula (i):

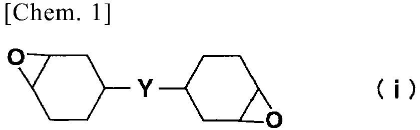

In Formula (i), Y represents a single bond or a linking group (a divalent group having one or more atoms). Examples of the linking group include a divalent hydrocarbon group, an epoxidized alkenylene group in which some or all of the carbon-carbon double bonds are epoxidized, a carbonyl group, an ether bond, an ester bond, a carbonate group, an amide group, and a linked group in which a plurality of the above groups are linked. Note that a substituent such as an alkyl group may be bonded to one or more of the carbon atoms constituting the cyclohexane ring (cyclohexene oxide group) in Formula (i).

Examples of the divalent hydrocarbon group include a linear or branched alkylene group having from 1 to 18 carbon atoms and a divalent alicyclic hydrocarbon group. Examples of the linear or branched alkylene group having from 1 to 18 carbon atoms include a methylene group, a methylmethylene group, a dimethylmethylene group, an ethylene group, a propylene group, and a trimethylene group. Examples of the divalent alicyclic hydrocarbon group include divalent cycloalkylene groups (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the epoxidized alkenylene group in which some or all of the carbon-carbon double bonds are epoxidized (sometimes referred to as the "epoxidized alkenylene group") include linear or branched alkenylene groups, each having from 2 to 8 carbon atoms, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an epoxidized alkenylene group in which all of the carbon-carbon double bonds are epoxidized, and more preferably an epoxidized alkenylene group having from 2 to 4 carbons in which all of the carbon-carbon double bonds are epoxidized.

Representative examples of the alicyclic epoxy compound represented by Formula (i) include (3,4,3',4'-diepoxy)bicyclohexyl and compounds represented by Formulae (i-1) to (i-10) below. In Formulae (i-5) and (i-7) below, l and m each represent an integer from 1 to 30. R' in Formula (i-5) below is an alkylene group having from 1 to 8 carbon atoms, and, among these, a linear or branched alkylene group having from 1 to 3 carbon atoms, such as a methylene group, an ethylene group, a propylene group, or an isopropylene group, is preferable. In Formulae (i-9) and (i-10) below, n1 to n6 each represent an integer from 1 to 30. In addition, other examples of the alicyclic epoxy compound represented by Formula (i) include 2,2-bis(3,4-epoxycyclohexyl)propane, 1,2-bis(3,4-epoxycyclohexan-1-yl)ethane, 1,2-epoxy-1,2-bis(3,4-epoxycyclohexan-1-yl)ethane, and bis(3,4-epoxycyclohexylmethyl)ether.

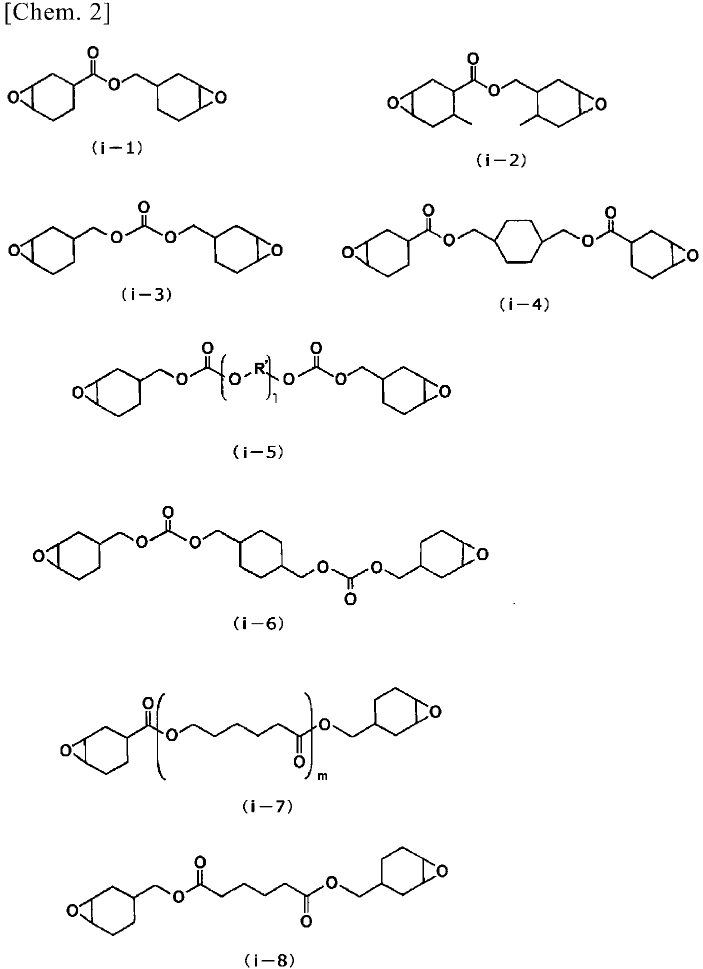

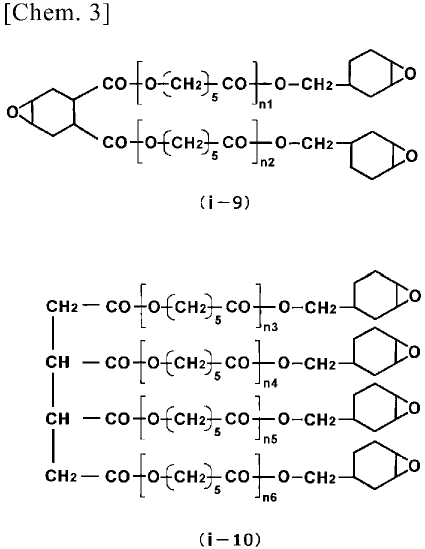

Examples of (II) the compound in which an epoxy group is directly bonded to an alicyclic ring through a single bond include compounds represented by Formula (ii).

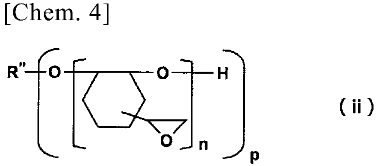

In Formula (ii), R" is a group resulting from elimination of a quantity of p hydroxyl groups (-OH) from a structural formula of a p-hydric alcohol (p-valent organic group), wherein p and n each represent a natural number. Examples of the p-hydric alcohol [R"(OH)ₚ] include polyhydric alcohols (such as alcohols having from 1 to 15 carbon atoms), such as 2,2-bis(hydroxymethyl)-1-butanol. Here, p is preferably from 1 to 6, and n is preferably from 1 to 30. When p is 2 or more, n in each group within the brackets [] (within the outer brackets) may be the same or different. Specific examples of the compound represented by Formula (ii) include a 1,2-epoxy-4-(2-oxiranyl)cyclohexane adduct of 2,2-bis(hydroxymethyl)-1-butanol (such as, for example, product name "EHPE3150" (available from Daicel Corporation)).

Examples of (III) the compound having an alicyclic ring and a glycidyl ether group in the molecule include glycidyl ethers of alicyclic alcohols (in particular, alicyclic polyhydric alcohols). More particularly, examples of (III) the compound include compounds obtained by hydrogenating a bisphenol A type epoxy compound (a hydrogenated bisphenol A type epoxy compound), such as 2,2-bis[4-(2,3-epoxypropoxy)cyclohexyl]propane and 2,2-bis[3,5-dimethyl-4-(2,3-epoxypropoxy)cyclohexyl]propane; compounds obtained by hydrogenating a bisphenol F type epoxy compound (a hydrogenated bisphenol F type epoxy compound), such as bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane, and bis[3,5-dimethyl-4-(2,3-epoxypropoxy)cyclohexyl]methane; hydrogenated bisphenol type epoxy compounds; hydrogenated phenol novolac type epoxy compounds; hydrogenated cresol novolac type epoxy compounds; hydrogenated cresol novolac type epoxy compounds of bisphenol A; hydrogenated naphthalene type epoxy compounds; hydrogenated epoxy compounds of an epoxy compound obtained from trisphenolmethane; and other hydrogenated epoxy compounds of an epoxy compound having an aromatic ring.

Examples of the aromatic epoxy compounds include epibis type glycidyl ether type epoxy resins obtained by a condensation reaction between bisphenols (such as bisphenol A, bisphenol F, bisphenol S, and fluorenebisphenol) and an epihalohydrin (bisphenol type epoxy compounds such as bisphenol A type epoxy compounds and bisphenol F type epoxy compounds); high molecular weight epibis type glycidyl ether type epoxy resins obtained by further subjecting the above epibis type glycidyl ether type epoxy resins to an addition reaction with the bisphenols described above; novolac alkyl type glycidyl ether type epoxy resins obtained by subjecting phenols (such as phenol, cresol, xylenol, resorcin, catechol, bisphenol A, bisphenol F, and bisphenol S) and an aldehyde (such as formaldehyde, acetaldehyde, benzaldehyde, hydroxybenzaldehyde, or salicylaldehyde) to a condensation reaction to yield polyhydric alcohols, and then further subjecting the polyhydric alcohols to a condensation reaction with an epihalohydrin; and epoxy compounds in which two phenol skeletons are bonded at the 9-position of a fluorene ring, and a glycidyl group is bonded directly or via an alkyleneoxy group to each of the oxygen atoms resulting from eliminating a hydrogen atom from a hydroxy group of these phenol skeletons.

Examples of the aliphatic epoxy compound include a glycidyl ether of a q-hydric alcohol, the alcohol having no cyclic structure (q is a natural number); a glycidyl ester of a monovalent or polyvalent carboxylic acid (e.g., acetic acid, propionic acid, butyric acid, stearic acid, adipic acid, sebacic acid, maleic acid, and itaconic acid); an epoxidized product of an oil and/or fat having a double bond, such as an epoxidized linseed oil, an epoxidized soybean oil, and an epoxidized castor oil; and an epoxidized product of a polyolefin (including a polyalkadiene), such as an epoxidized polybutadiene. Here, examples of the q-valent alcohol including no cyclic structure include monohydric alcohols, such as methanol, ethanol, 1-propyl alcohol, isopropyl alcohol, and 1-butanol; dihydric alcohols, such as ethylene glycol, 1,2-propanediol, 1,3-propanediol, 1,4-butanediol, neopentyl glycol, 1,6-hexanediol, diethylene glycol, triethylene glycol, tetraethylene glycol, dipropylene glycol, polyethylene glycol, and polypropylene glycol; and trihydric or higher polyhydric alcohols, such as glycerin, diglycerin, erythritol, trimethylolethane, trimethylolpropane, pentaerythritol, dipentaerythritol, and sorbitol. In addition, the q-hydric alcohol may be a polyether polyol, a polyester polyol, a polycarbonate polyol, or a polyolefin polyol, for example.

The proportion of the content of the epoxy compound (A) in the curable epoxy composition is preferably 10 mass% or more with respect to the total amount (100 mass%) of the curable epoxy composition. In one aspect of the curable epoxy composition (for example, in a case where the inorganic filler (E) is not included), the proportion of the content of the epoxy compound (A) is more preferably from 20 to 90 mass%, still more preferably from 30 to 70 mass%, and still even more preferably from 35 to 60 mass%. In another aspect of the curable epoxy composition (for example, in a case where the inorganic filler (E) is included), the proportion of the content of the epoxy compound (A) is more preferably from 10 to 60 mass%, still more preferably from 12 to 55 mass%, and still even more preferably from 14 to 50 mass%.

In the present description, the content of each component (such as the epoxy compound (A) and the acid anhydride-based curing agent (B)) contained in the curable epoxy composition can be appropriately selected from the range described, such that the total content of the respective components is 100 mass% or less.

### (Acid Anhydride-Based Curing Agent (B))

The acid anhydride-based curing agent (B) is a compound that has a function of curing the curable epoxy composition by reacting with the epoxy compound (A). A single type of the acid anhydride-based curing agent (B) may be used, or two or more thereof may be used.

As the acid anhydride-based curing agent (B), a well-known or commonly used acid anhydride-based curing agent can be used. Examples of the acid anhydride-based curing agent (B) include, but are not particularly limited to, methyltetrahydrophthalic anhydrides (such as 4-methyltetrahydrophthalic anhydride and 3-methyltetrahydrophthalic anhydride), methylhexahydrophthalic anhydrides (such as 4-methylhexahydrophthalic anhydride and 3-methylhexahydrophthalic anhydride), dodecenyl succinic anhydride, methyl endomethylene tetrahydrophthalic anhydride, phthalic anhydride, maleic anhydride, tetrahydrophthalic anhydride, hexahydrophthalic anhydride, methylcyclohexene dicarboxylic anhydride, pyromellitic anhydride, trimellitic anhydride, benzophenone tetracarboxylic anhydride, nadic anhydride, methylnadic anhydride, hydrogenated methylnadic anhydride, 4-(4-methyl-3-pentenyl)tetrahydrophthalic anhydride, succinic anhydride, adipic anhydride, sebacic anhydride, dodecanedioic anhydride, methylcyclohexene tetracarboxylic anhydride, vinyl ether-maleic anhydride copolymers, and alkyl styrene-maleic anhydride copolymers.

In particular, the acid anhydride-based curing agent (B) is preferably an acid anhydride that is liquid at 25°C (such as methyltetrahydrophthalic anhydride, methylhexahydrophthalic anhydride, dodecenyl succinic anhydride, or methyl endomethylene tetrahydrophthalic anhydride) from the viewpoint of handleability. Meanwhile, acid anhydrides that are solid at 25°C tend to improve the handleability as a curing agent in the curable epoxy composition, for example, when dissolved in an acid anhydride that is liquid at 25°C to form a liquid mixture.

Furthermore, the acid anhydride-based curing agent (B) preferably includes nadic anhydride such as nadic anhydride, methylnadic anhydride, or hydrogenated methylnadic anhydride, or a derivative thereof, and more preferably includes methylnadic anhydride, from the viewpoint of further increasing the glass transition temperature of the cured product and further improving the heat resistance of the cured product.

The content (blending amount) of the acid anhydride-based curing agent (B) in the curable epoxy composition is not particularly limited, but is preferably from 50 to 200 parts by mass and more preferably from 80 to 150 parts by mass with respect to 100 parts by mass of the total amount of the epoxy compound (A) contained in the curable epoxy composition. More specifically, the acid anhydride-based curing agent (B) is preferably used in a proportion of from 0.5 to 1.5 equivalents (preferably from 0.8 to 1.1 equivalents, and more preferably 0.9 equivalents or more and less than 1.0 equivalent) per 1 equivalent of epoxy groups in the epoxy compound (A) contained in the curable epoxy composition. When the content of the acid anhydride-based curing agent (B) is 50 parts by mass or more, curing can sufficiently proceed, and the cured product tends to exhibit further improved heat resistance and toughness. If the content of the acid anhydride-based curing agent (B) is 200 parts by mass or less, discoloration is suppressed, and the obtained cured product tends to have excellent hue. The proportion of the acid anhydride-based curing agent (B) in the curing agent contained in the curable epoxy composition is preferably more than 80 mass%, and may be 85 mass% or more, 90 mass% or more, 95 mass% or more, or 99 mass% or more with respect to the total amount (100 mass%) of the curing agent.

### (Amine-Based Curing Accelerator (C))

The amine-based curing accelerator (C) is a compound that has a function of accelerating the reaction rate when the epoxy compound (A) reacts with the acid anhydride-based curing agent (B). By using the amine-based curing accelerator (C) as a curing accelerator, a cured product having excellent heat resistance can be formed. Examples of the amine-based curing accelerator (C) include imidazole-based curing accelerators and strongly basic compound-based curing accelerators. A single type of the amine-based curing accelerator (C) may be used, or two or more thereof may be used.

As the imidazole-based curing accelerator, a well-known or commonly used imidazole-based curing accelerator can be used. Examples of the imidazole-based curing accelerator include, but are not particularly limited to, imidazole compounds such as 1-methylimidazole, 2-methylimidazole, 2-ethyl-4-methylimidazole, 1-(2-hydroxypropyl)imidazole, 2-undecylimidazole, 2-heptadecylimidazole, 2-phenylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-undecylimidazolium trimellitate, 1-cyanoethyl-2-phenylimidazolium trimellitate, 2-methylimidazolium isocyanurate, 2-phenylimidazolium isocyanurate, 2,4-diamino-6-[2-methylimidazolyl-(1)]-ethyl-s-triazine, and 2,4-diamino-6-[2-ethyl-4-methylimidazolyl-(1)]-ethyl-s-triazine.

The imidazole-based curing accelerator may be a derivative of the imidazole compounds, such as an amine adduct of the imidazole compounds (such as an amine adduct with an epoxy compound). Examples of the epoxy compound include those exemplified and described as the epoxy compound (A). A single type of the epoxy compound described above may be used, or two or more thereof may be used.

The imidazole-based curing accelerator preferably includes, among the above-described compounds, at least 1-methylimidazole, 2-methylimidazole, 1-(2-hydroxypropyl)imidazole, or an amine adduct of these compounds (in particular, an amine adduct with an epoxy compound, and more preferably an amine adduct with a bisphenol-type epoxy compound) from the viewpoint of further increasing the glass transition temperature of the cured product and further improving the heat resistance of the cured product. In particular, the imidazole-based curing accelerator preferably includes 1-(2-hydroxypropyl)imidazole or an amine adduct (in particular, an amine adduct with an epoxy compound), and more preferably an amine adduct, still more preferably an amine adduct of 2-methylimidazole and an epoxy compound, and particularly preferably an amine adduct of 2-methylimidazole and a bisphenol-type epoxy compound, from the viewpoint of superior long-term stability (shelf life) in a state of being mixed with the acid anhydride-based curing agent (B).

The imidazole-based curing accelerator may be blended as a latent curing accelerator. By using such a latent curing accelerator, the long-term stability of the curable epoxy composition can be improved. Examples of the latent curing accelerator include that obtained by microencapsulating the imidazole-based curing accelerator (microcapsule-type latent curing agent).

The microcapsule-type latent curing agent includes, for example, a core and a shell covering the surface of the core, and the core includes the imidazole-based curing accelerator and the shell includes an organic polymer and/or an inorganic compound. Note that, when the shell is an inorganic compound, the microcapsule-type latent curing agent does not correspond to the inorganic filler (E).

The content of the shell is preferably from 0.01 to 100 parts by mass, more preferably from 0.1 to 80 parts by mass, still more preferably from 1 to 60 parts by mass, and particularly preferably from 5 to 50 parts by mass with respect to 100 parts by mass of the core content. If the content of the shell is within the above range, both excellent long-term stability and excellent curability can be achieved.

Examples of the organic polymer include natural polymers such as cellulose and synthetic resins. In particular, synthetic resins are preferable from the viewpoint of superior long-term stability, ease of breakage of the shell during curing, and further improved uniformity in physical properties of the cured product.

Examples of the synthetic resins include epoxy resins, acrylic resins, polyester resins, phenol resins, polyethylene resins, nylon resins, polystyrene resins, urea resins, urethane resins, and mixtures and copolymers thereof.

Examples of the inorganic compound include boron compounds such as boron oxide and borate esters, silicon dioxide, and calcium oxide. In particular, boron oxide is preferable from the viewpoint of excellent film stability and ease of film breakage during heating.

As the microcapsule-type latent curing agent, a well-known or commonly used microcapsule-type latent curing agent can be used, and a commercially available products such as product names "Novacure HX-3742" and "Novacure HXA-3792" (both available from Asahi Kasei Corporation), and product name "Technicure LC-80" (available from A & C Catalysts, Inc.), can be used.

The strongly basic compound-based curing accelerator is preferably a curing accelerator containing a strongly basic compound having a pKa of 10 or more, more preferably a pKa of 11 or more, still more preferably a pKa of from 11 to 16, and particularly preferably a pKa of from 11 to 14. The pKa is the pKa in water. The strongly basic compound is preferably a nitrogen-containing cyclic compound having the above pKa. Specific examples of the strongly basic compound include 1,8-diazabicyclo[5.4.0]undecene-7 (DBU) and salts thereof (for example, a phenol salt, an octylate salt, a 2-ethylhexanoate salt, a p-toluenesulfonate salt, a formate salt, and a tetraphenylborate salt), 1,5-diazabicyclo[4.3.0]nonene-5 (DBN) and salts thereof (for example, a phenol salt, an octylate salt, a p-toluenesulfonate salt, a formate salt, and a tetraphenylborate salt), tetramethylguanidine (TMG) and salts thereof, 1,4-diazabicyclo[2.2.2]octane (DABCO), 1,5,7-triazabicyclo[4.4.0]decene-5 (TBD) and salts thereof, and 7-methyl-1,5,7-triazabicyclo[4.4.0]decene-5 (MTBD) and salts thereof. In particular, DBU and a salt thereof are more preferable as the strongly basic compound.

As the amine-based curing accelerator (C), a commercially available product such as product name "Technicure LC-100" (available from A & C Catalysts, Inc.) can also be used.

The content (blending amount) of the amine-based curing accelerator (C) in the curable epoxy composition is not particularly limited, but is preferably from 0.01 to 5 parts by mass, more preferably from 0.03 to 3 parts by mass, and still more preferably from 0.1 to 2 parts by mass with respect to 100 parts by mass of the total amount of a curable compound (for example, a compound reactive with a curing agent, examples of the compound including the epoxy compound (A) or the polyester polyol (D)) contained in the curable epoxy composition. When the content of the amine-based curing accelerator (C) is 0.01 parts by mass or more, the heat resistance is further improved, and a more efficient curing acceleration effect tends to be obtained. When the polyester polyol (D) is included, the cured product is enhanced in both heat resistance and bending strain. When the content of the amine-based curing accelerator (C) is 5 parts by mass or less, discoloration is suppressed, and the obtained cured product tends to have excellent hue. When the amine-based curing accelerator (C) is blended as a latent curing accelerator, the content as the latent curing accelerator (for example, the total content of the core and the shell) is, for example, from 0.6 to 10 parts by mass, and preferably from 2 to 8 parts by mass with respect to 100 parts by mass of the total amount of the curable compound contained in the curable epoxy composition. The proportion of the amine-based curing accelerator (C) in the curing accelerator contained in the curable epoxy composition is preferably 50 mass% or more, and may be 60 mass% or more, 75 mass% or more, 90 mass% or more, 95 mass% or more, or 99 mass% or more with respect to the total amount (100 mass%) of the curing accelerator.

### (Polyester Polyol (D))

Examples of the polyester polyol (D) include compounds having two or more hydroxy groups and two or more ester bonds in the molecule. Examples of the polyester polyol include polylactone polyols such as polycaprolactone polyol, aliphatic polyester polyols, aromatic polyester polyols, and alicyclic polyester polyols. A single type of the polyester polyol (D) may be used, or two or more thereof may be used.

In particular, as the polyester polyol (D), a polylactone polyol and/or an aliphatic polyester polyol are preferably contained, from the viewpoint of achieving improved flexibility while maintaining a high glass transition temperature of the cured product. From the same viewpoint, as the polyester polyol (D), a polyester diol and/or a polyester triol are preferably contained.

The molecular weight of the polyester polyol (D) is not particularly limited, but is preferably 250 or more, more preferably 600 or more, still more preferably 1100 or more, and particularly preferably 1700 or more. If the molecular weight is 250 or more (in particular, 600 or more), the toughness of the cured product is easily improved, and the bending strain is further improved. The molecular weight may be, for example, 100000 or less, 50000 or less, 10000 or less, or 4000 or less. The molecular weight of the polyester polyol (D) means a number average molecular weight in terms of standard polystyrene as measured by gel permeation chromatography (GPC).

The hydroxyl value of the polyester polyol (D) is not particularly limited, but is preferably 600 KOH mg/g or less, more preferably 200 KOH mg/g or less, still more preferably 100 KOH mg/g or less, and particularly preferably 80 KOH mg/g or less. When the hydroxyl value is 600 KOH mg/g or less (in particular, 200 KOH mg/g or less), the chain transfer reaction in the polymerization of the epoxy compound (A) is suppressed, the degree of polymerization of the epoxy backbone tends to be high, and the glass transition temperature of the cured product can be maintained at a high level. The hydroxyl value can be measured by a potentiometric titration method in accordance with JIS K0070.

When the curable epoxy composition contains the polyester polyol (D), the proportion of the content of the polyester polyol (D) in the curable epoxy composition is not particularly limited, but is preferably from 1 to 30 mass%, more preferably from 3 to 20 mass%, and still more preferably from 5 to 15 mass% with respect to the total amount (100 mass%) of the curable epoxy composition. When the proportion of the content is within the above range, the cured product is further enhanced in both heat resistance and bending strain.

### (Inorganic Filler (E))

As the inorganic filler (E), a well-known or commonly used inorganic filler can be used. Examples of the inorganic filler (E) include, but are not particularly limited to, powders such as silica, alumina, zircon, calcium silicate, calcium phosphate, calcium carbonate, magnesium carbonate, silicon carbide, silicon nitride, aluminum nitride, boron nitride, aluminum hydroxide, iron oxide, zinc oxide, zirconium oxide, magnesium oxide, titanium oxide, aluminum oxide, calcium sulfate, barium sulfate, forsterite, steatite, spinel, clay, kaolin, dolomite, hydroxyapatite, nepheline syenite, cristobalite, wollastonite, diatomaceous earth, and talc, and molded bodies (for example, spheroidized beads) thereof. Examples of the inorganic filler (E) also include those obtained by subjecting the inorganic filler described above to a well-known or commonly used surface treatment. A single type of the inorganic filler (E) may be used, or two or more types thereof may be used. Among these inorganic fillers, silica, alumina, and aluminum nitride are preferable, and silica (a silica filler) is more preferable as the inorganic filler (E), from the viewpoint of allowing the cured product to have a low coefficient of liner expansion and to be less likely to undergo warpage.

The silica is not particularly limited, and well-known or commonly used silica such as fused silica, crystalline silica, and high-purity synthetic silica can be used. As the silica, silica subjected to a well-known or commonly used surface treatment (for example, a surface treatment with a surface treatment agent such as a metal oxide, a silane coupling agent, a titanium coupling agent, an organic acid, a polyol, or silicone) can also be used.

Examples of the silica include hydrophilic silica and hydrophobic silica, and hydrophobic silica is preferable from the viewpoint of easily increasing the viscosity of the curable epoxy composition, suppressing sedimentation of a solid component such as the microcapsule-type latent curing agent to improve the dispersibility, and further imparting thixotropy to the curable epoxy composition and achieving excellent workability such impregnation properties and casting properties.

The hydrophobic silica is silica obtained by subjecting hydrophilic silica to a hydrophobization treatment. Examples of a treatment agent used in the hydrophobization treatment include organic silyl compounds such as methyltrichlorosilane, dimethyldichlorosilane, trimethylchlorosilane, hexamethyldisilazane, methyltrialkoxysilane, dimethyldialkoxysilane, trimethylalkoxysilane, ethyltrichlorosilane, propyltrichlorosilane, hexyltrichlorosilane, long-chain alkyltrichlorosilane, ethyltrialkoxysilane, propyltrialkoxysilane, hexyltrialkoxysilane, long-chain alkyltrialkoxysilane, methacrylsilane, fluoroalkylsilane, and perfluoroalkylsilane; and silicone compounds such as polysiloxanes including dimethylpolysiloxane (silicone oil), methylphenylpolysiloxane, methylhydrogenpolysiloxane, and amino-modified silicones. In particular, polysiloxanes are preferably used in the hydrophobization treatment. As the hydrophobization treatment method, a well-known method can be used to perform the hydrophobization treatment, and examples of the method include a liquid phase method, a gas phase method, and an autoclave method.

The shape of the silica is not particularly limited, and examples of the shape include a powder shape, a spherical shape, a crushed shape, a fibrous shape, a acicular shape, and a flaky shape. In particular, spherical silica is preferable, and truly spherical silica (for example, spherical silica having an aspect ratio of 1.2 or less) is particularly preferable, from the viewpoint of dispersibility.

The specific surface area of the silica is not particularly limited, but is preferably 10 m²/g or more, more preferably 40 m²/g or more, and still more preferably 70 m²/g or more, from the viewpoint of imparting thixotropy to the curable epoxy composition and achieving excellent workability such as impregnation properties and casting properties.

The median particle size of the silica is not particularly limited, but is preferably 200 nm or less, more preferably 100 nm or less, and still more preferably 50 nm or less, from the viewpoint of imparting thixotropy to the curable epoxy composition and achieving excellent workability such as impregnation properties and casting properties. The median particle size is, for example, 3 nm or more. The median particle size is preferably from 0.1 to 50 µm, and more preferably from 0.1 to 30 µm from the viewpoint of improving the low linear expansion, the strength, and the crack resistance of the cured product. The median particle size means a particle size at an cumulative value of 50% in the particle size distribution (median diameter) measured by a laser diffraction/scattering method.

When the curable epoxy composition contains the inorganic filler (E), the content (blending amount) of the inorganic filler (E) in the curable epoxy composition is not particularly limited, but is preferably from 0.5 to 500 parts by mass with respect to 100 parts by mass of the total amount of the curable compound contained in the curable epoxy composition. In one aspect, the content is more preferably from 0.5 to 50 parts by mass, and more preferably from 1 to 10 parts by mass. In this case, thixotropy can be easily imparted to the composition. In another aspect, the content is more preferably 100 parts by mass or more (for example, from 100 to 500 parts by mass), and more preferably 250 parts by mass or more (for example, from 250 to 400 parts by mass). In this case, the linear expansion of the cured product is easily reduced.

When the curable epoxy composition contains the inorganic filler (E), the proportion of the content of the inorganic filler (E) in the curable epoxy composition is not particularly limited, but is preferably from 0.3 to 90 mass% with respect to the total amount (100 mass%) of the curable epoxy composition. In one aspect, the proportion of the content is more preferably from 0.3 to 8 mass%, and more preferably from 0.5 to 3 mass%. In this case, thixotropy can be easily imparted to the composition. In another aspect, the proportion of the content is more preferably 50 mass% or more (for example, from 50 to 90 mass%), and more preferably 55 mass% or more (for example, from 55 to 80 mass%). In this case, the linear expansion of the cured product is easily reduced.

The curable epoxy composition may contain a curable compound besides the epoxy compound (A) and the polyester polyol (D) (a compound that can react with a curing agent such as the acid anhydride-based curing agent (B)). The proportion of the total content of the epoxy compound (A) and the polyester polyol (D) in the curable compounds in the curable epoxy composition is preferably 50 mass% or more, more preferably 60 mass% or more, even more preferably 70 mass% or more, yet even more preferably 80 mass% or more, still even more preferably 90 mass% or more, and particularly preferably 95 mass% or more with respect to the total amount (100 mass%) of all the curable compounds in the curable epoxy composition. When the curable epoxy composition does not contain the polyester polyol (D), the above-described proportion of the content is the proportion of the content of the epoxy compound (A).

The proportion of the epoxy compound (A) in the curable epoxy composition is preferably 50 mass% or more, and may be 60 mass% or more, 70 mass% or more, or 75 mass% or more with respect to the total amount (100 mass%) of the curable compound contained in the curable epoxy composition. The proportion of the polyester polyol (D) in the curable epoxy composition is preferably from 5 to 45 mass%, more preferably from 10 to 35 mass%, and still more preferably from 15 to 30 mass% with respect to the total amount (100 mass%) of the curable compound contained in the curable epoxy composition. If the proportion is within the above range, the cured product is further enhanced in both heat resistance and bending strain.

The curable epoxy composition may contain an additional component in addition to the respective components described above. If a compound having a hydroxy group, such as ethylene glycol, diethylene glycol, propylene glycol, or glycerin, (in particular, a polyhydric alcohol other than the polyester polyol (D)) is included as the additional component, the reaction can be allowed to proceed gently. In addition, a commonly used additive can be used as long as the viscosity and the transparency are not impaired. Examples of the additive include antifoamers such as silicone-based antifoamers and fluorine-based antifoamers, a leveling agent, coupling agents such as silane coupling agents including γ-glycidoxypropyltrimethoxysilane and 3-mercaptopropyltrimethoxysilane, a surfactant, a flame retardant, a colorant, an antioxidant, an ultraviolet absorber, an ion adsorbent, a coloring agent, phosphors (for example, inorganic phosphor fine particles such as YAG-based phosphor fine particles and silicate-based phosphor fine particles), a mold release agent, a thickener, a dispersant, a rust inhibitor, a corrosion inhibitor, a freezing point depressant, an antiwear additive, and a wettability modifier. In particular, when 1-methylimidazole is used as the amine-based curing accelerator (C), an antifoamer and a leveling agent are preferably used from the viewpoint of reducing the viscosity and achieving excellent impregnation properties. One type of the additional component may be used, or two or more types thereof may be used.

If the above antioxidant is contained, a cured product further enhanced in heat resistance (in particular, yellowing resistance) can be formed. As the antioxidant, a well-known or commonly used antioxidant can be used. Examples of the antioxidant include, but are not particularly limited to, a phenol-based antioxidant (phenol-based compound), a hindered amine-based antioxidant (hindered amine-based compound), a phosphorous-based antioxidant (phosphorous-based compound), and a sulfur-based antioxidant (sulfur-based compound).

Examples of the phenol-based antioxidant include monophenols such as 2,6-di-t-butyl-p-cresol, butylated hydroxyanisole, 2,6-di-t-butyl-p-ethylphenol, and stearyl-(3-(3,5-di-t-butyl-4-hydroxyphenyl) propionate; bisphenols such as 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), and 3,9-bis[1,1-dimethyl-2-{β-(3-t-butyl-4-hydroxy-5-methylphenyl)propionyloxy}ethyl]2,4,8,10-tetraoxaspiro[5.5]undecane; and polymeric phenols such as 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis(4'-hydroxy-3'-t-butylphenyl)butyric acid]glycol ester, 1,3,5-tris(3',5'-di-t-butyl-4'-hydroxybenzyl)-s-triazine-2,4,6-(1H,3H,5H)trione, and tocophenol.

Examples of the hindered amine-based antioxidant include bis(1,2,2,6,6-pentamethyl-4-piperidyl)[[3,5-bis(1,1-dimethylethyl)-4-hydroxyphenyl]methyl]butyl malonate, bis(1,2,2,6,6-pentamethyl-4-piperidyl) sebacate, methyl-1,2,2,6,6-pentamethyl-4-piperidyl sebacate, and 4-benzoyloxy-2,2,6,6-tetramethylpiperidine.

Examples of the phosphorous-based antioxidant include phosphites (phosphite-based antioxidants) such as triphenyl phosphite, diphenylisodecyl phosphite, phenyldiisodecyl phosphite, tris(nonylphenyl) phosphite, diisodecyl pentaerythritol phosphite, tris(2,4-di-t-butylphenyl) phosphite, cyclic neopentanetetrayl bis(octadecyl)phosphite, cyclic neopentanetetrayl bis(2,4-dit-butylphenyl) phosphite, cyclic neopentanetetrayl bis(2,4-di-t-butyl-4-methylphenyl) phosphite, and bis[2-t-butyl-6-methyl-4-{2-(octadecyloxycarbonyl)ethyl}phenyl] hydrogen phosphite; and oxaphosphaphenanthrene oxides such as 9,10-dihydro-9-oxa-10-phosphaphenanthrene-10-oxide and 10-(3,5-di-t-butyl-4-hydroxybenzyl)-9,10-dihydro-9-oxa-10-phosphaphenanthrene-10-oxide.

Examples of the sulfur-based antioxidant include dodecanethiol, dilauryl-3,3'-thiodipropionate, dimyristyl-3,3'-thiodipropionate, and distearyl-3,3'-thiodipropionate.

In particular, the antioxidant preferably includes the phosphorous-based antioxidant, and more preferably includes a phosphite-based antioxidant from the viewpoint of further improving the heat resistance of the cured product.

When the curable epoxy composition contains the antioxidant, the content (blending amount) of the antioxidant in the curable epoxy composition is not particularly limited, but is preferably from 0.1 to 5 parts by mass and more preferably from 0.5 to 3 parts by mass with respect to 100 parts by mass of the total amount of the epoxy compound (A) contained in the curable epoxy composition. When the content of the antioxidant is 0.1 parts by mass or more, Oxidation of the cured product is efficiently prevented, and the cured product tends to have further improved heat resistance and yellowing resistance. When the content of the antioxidant is 5 parts by mass or less, discoloration is suppressed, and a cured product having further improved hue tends to be easily obtained.

As the wettability modifier, a well-known or commonly used wettability modifier can be used, and a commercially available products such as product names "BYK-327", "BYK-302", "BYK-310", "BYK-320", and "BYK-330" (all available from BYK additive & Instruments), can be used.

The curable epoxy composition is not particularly limited, but can be prepared by stirring and mixing the respective above-described components under heating as necessary. The curable epoxy composition can be used as a one-part composition in which the respective components previously mixed is used as is, or alternatively, used as a multi-part (for example, two-part) composition in which two or more components that has been separately stored are mixed before use and used. The stirring and mixing method is not particularly limited, and a well-known or commonly used stirring and mixing means can be used, for example, including various mixers such as a dissolver and a homogenizer, a kneader, a roll mill, a bead mill, and a planetary centrifugal mixer. In addition, after the stirring and mixing, degassing may be performed under vacuum.

### [Cured product]

By curing the curable epoxy composition, a cured product having excellent heat resistance can be obtained. As a means for curing, a well-known or commonly used method such as a heat treatment can be used. The temperature during curing by heating (curing temperature) is not particularly limited, but is preferably from 45 to 220°C, more preferably from 50 to 200°C, and still more preferably from 55 to 190°C. The heating time (curing time) during curing is not particularly limited, but is preferably from 30 to 600 minutes, more preferably from 45 to 540 minutes, and still more preferably from 60 to 480 minutes. When the curing temperature and the curing time are 45°C or higher, curing becomes sufficient, and when the curing temperature is 220°C or lower, decomposition of a resin component can be suppressed. Although the curing conditions depend on various conditions, the curing conditions can be appropriately adjusted, for example, by shortening the curing time when the curing temperature is increased, or increasing the curing time when the curing temperature is decreased. The curing can be performed in one step or in multiple steps of two or more steps.

The cured product preferably has a bending strain at 23°C of 2.0% or more, more preferably 3.0% or more, still more preferably 4.0% or more, and particularly preferably 4.3% or more. When the bending strain is 2.0% or more (in particular, 4.0% or more), the flexibility in an normal temperature environment is improved and toughness is enhanced. The bending strain at 23°C can be measured in accordance with JIS K7171 (2008).

The curable epoxy composition and the cured product are used in a component included in a rotatory electric machine (for a rotatory electric machine). The cured product has excellent adhesion properties to PEEK resin, and therefore can be preferably used in a component in which the PEEK resin is preferably used, particularly in an automobile component (for example, for an automobile EV motor). Specific usage aspects of the cured product include insulating materials, coating materials, and adhesives. The curing agent composition containing the acid anhydride-based curing agent (B) and the amine-based curing accelerator (C) has a long shelf life and is less likely to thicken during storage, and therefore, the curable epoxy composition obtained by mixing the curing agent composition and the epoxy compound (A) has excellent wettability and excellent impregnation properties to an object to which the curable epoxy composition is to be applied. Therefore, the curable epoxy composition can be preferably used in processes such as atmospheric pressure impregnation, vacuum impregnation, pressure impregnation, and dipping.

The curable epoxy composition and the cured product are used in a rotatory electric machine as described above, for example, for protecting a rotor wire (for covering a winding, a winding tip, and the like), for impregnating/casting a stator coil, for impregnating/casting a stator such that the entire stator is covered, for magnet-fixing in which in a rotor and/or a stator, a magnet inserted into a hole provided in a rotor core or a stator core is fixed to an inner wall of the hole, and for filling a gap between the hole and the magnet.

In particular, the curable epoxy composition and the cured product are preferably used for impregnating a coil, for example, used for impregnating/casting a coil (wire, winding) in a stator or a rotor of a rotatory electric machine.

By using the cured product in the rotatory electric machine, there can be obtained a rotatory electric machine including the cured product in a form of, for example, a rotor for a rotatory electric machine, the rotor including the cured product covering a winding of the rotor; a stator for a rotatory electric machine, the stator including the cured product that is formed to cover a stator coil; a stator for a rotatory electric machine, the stator including the cured product covering the entire stator; a rotor or a stator for a rotatory electric machine, the rotor or the stator including a rotor core or a stator core having a hole, a magnet inserted into the hole, and the cured product for bonding the magnet to an inner wall of the hole; or a rotor or a stator for a rotatory electric machine, the rotor or the stator including a rotor core or a stator core having a hole, a magnet inserted into the hole, the cured product with which a gap between the magnet and an inner wall of the hole is filled.

Each aspect disclosed in the present specification can be combined with any other feature disclosed in the present specification. The respective configurations, combinations thereof, or the like in each of the embodiments are exemplary, and additions, omissions, replacements, and other changes of the configurations may be made as appropriate without departing from the spirit of the present disclosure. In addition, each of the inventions according to the present disclosure is not limited by the embodiments or the following Examples, but is limited only by the claims.

### Example

Hereinafter, an embodiment of the present disclosure will be described in more detail based on Examples.

### Example 1

### (Preparation of Curable Epoxy Composition)

An epoxy compound (A) and a polyester polyol (D) were uniformly mixed in a blending proportion (unit: parts by mass) shown in Table 1 using a planetary centrifugal mixer (product name "THINKY MIXER AR-250", available from THINKY CORPORATION), and the mixture was degassed.

Next, an acid anhydride-based curing agent (B) and an amine-based curing accelerator (C) were added and uniformly mixed in a blending proportion (unit: part by mass) shown in Table 1 using a planetary centrifugal mixer (product name "THINKY MIXER AR-250", available from THINKY CORPORATION), and the mixture was degassed to prepare a curable epoxy composition.

### (Preparation of Cured Product)

The curable epoxy composition obtained above was filled in a mold, and continuously heated at 80°C for 1 hour, at 130°C for 1 hour, and at 180°C for 1 hour using an oven to prepare a cured product of Example 1.

### Examples 2 to 6 and Comparative Examples 1 and 2

### (Preparation of Curable Epoxy Composition)

Curable epoxy compositions of Examples 2 to 6 and Comparative Examples 1 and 2 were prepared in the same manner as in Example 1 except that the composition of the curable epoxy composition was changed to the compositions shown in Table 1.

### (Preparation of Cured Product)

The curable epoxy compositions obtained above were filled in molds and, using an oven, heated continuously at 80°C for 1 hour, at 130°C for 1 hour, and at 180°C for 1 hour for the curable epoxy compositions of Examples 2 to 6 and Comparative Example 2, heated continuously at 130°C for 2 hours and at 150°C for 1 hour for the curable epoxy composition of Comparative Example 1, and heated continuously at 100°C for 1 hour, at 150°C for 1 hour, and at 180°C for 3 hours for the curable epoxy composition of Comparative Example 3, and thus cured to prepare cured products of Examples 2 to 6 and Comparative Examples 1 to 3.

### <Evaluation>

The curable epoxy compositions and the cured products obtained in Examples and Comparative Examples were subjected to the following evaluation tests.

### (1) Adhesive Strength

Each of the curable epoxy compositions was smoothly applied to a glass plate in a uniform thickness (40 µm), and transferred to Si chips (1.25 mm square). The Si chips were evenly arranged on a base made from a PEEK resin (2.5 × 1.5 cm) with a tweezer, and subjected to thermal curing under the same conditions as that in the preparation of the above cured product to prepare a test piece in which the cured product of the curable epoxy compound and the Si chips were stacked in this order on the PEEK resin. The test piece was attached to a bonding tester (product name "4000pxy DS100", available from Nordson DAGE), a tool attached to a load sensor of the bonding tester was moved to a set height (150 µm) above the base of the PEEK resin, the Si chips were pressed, and a load [N] at the time of fracture of a joint portion of the cured product was measured as the adhesive strength to the PEEK resin.

### (2) Glass Transition Temperature

The glass transition temperature of each of the cured products was measured using a differential scanning calorimeter (product name "Q2000", available from TA Instruments Inc.) as follows. A pretreatment was implemented (in which the temperature was increased from 30°C to 250°C at a temperature increase rate of 10°C/min, and then decreased from 250°C to 30°C at a temperature decrease rate of -10°C/min), and then the glass transition temperature was measured under a nitrogen stream at a temperature increase rate of 10°C/min in a measurement temperature range of from 30 to 250°C. The temperature at the inflection point of the obtained temperature thermal history curve was then determined as the glass transition temperature.

### (3) Bending Strain

The bending strain of each of the cured products was measured in accordance with JIS K7171 (2008).

### (4) Viscosity and Viscosity Increase Rate at 25°C

The viscosity at 25°C of each of the curable epoxy compositions was measured under conditions of a rheometer (product name "Modular Compact Rheometer, MCR302", available from Anton Paar GmbH, rotor diameter: 25 mm, sample thickness: 0.1 mm).

Each of the curable epoxy compositions was subjected to a storage test under conditions of a temperature of 23 ± 5°C and a humidity of 50 ± 5% for 41 days, and the viscosity at 25°C after the storage test was measured in the same manner.

Further, the viscosities at 25°C before and after the storage test were compared, and the viscosity increase rate (%) before and after the storage test was calculated. Example in which the gelation occurred after the storage test and the viscosity could not be measured is shown as "-".

### [Table 1]

**Table 1**

| | | Example | | | | | | Comparative Example | |
|---|---|---|---|---|---|---|---|---|---|
| | | 1 | 2 | 3 | 4 | 5 | 6 | 1 | 2 |
| Epoxy compound (A) | CELLOXIDE 2021P | 100 | 100 | 100 | 100 | 100 | 100 | - | - |
| | YD128 | - | - | - | - | - | - | - | - |
| | E530 | - | - | - | - | - | - | - | 100 |
| Polyimide compound | Voltatex4200 | - | - | - | - | - | - | 100 | - |
| Polyester polyol (D) | Polyol A | 20 | 20 | 20 | 20 | 20 | 20 | - | - |
| Acid anhydride-based curing agent (B) | NMA | 103 | 112 | 112 | 112 | - | - | - | - |
| | MTHPA | - | - | - | - | 100 | 100 | - | - |
| Amine-based curing accelerator (C) | 1B2MZ | 1.76 | - | - | - | - | - | - | - |
| | HPI | - | 1.30 | - | - | - | - | - | - |
| | U-CAT SA-102 | - | - | 1.05 | - | - | - | - | - |
| | U-CAT SA-1 | - | - | - | 1.05 | - | - | - | - |
| | LC-80 | - | - | - | - | 1.00 | - | - | - |
| | LC-100 | - | - | - | - | - | 1.00 | - | - |
| Adhesive strength (die shear test) | Load [N] | 5.34 | 5.10 | 5.06 | 5.21 | 4.85 | 2.96 | 1.00 | 4.93 |
| Glass transition temperature | [°C] | 205 | 209 | 212 | 211 | 177 | 174 | 61 | 163 |
| Bending strain | [%] (23°C) | 4.3 | 7.9 | 6.8 | 7.1 | 7.1 | 8.1 | 3.7 | 6.3 |
| Viscosity (0 day) | [mPa·s] | 646 | 666 | 572 | 617 | 245 | 244 | 2270 | 3246 |
| Viscosity (41 days) | [mPa·s] | - | - | - | - | 26708 | 1159 | 2270 | 4279 |
| Viscosity increase rate | [%] | - | - | - | - | 10789 | 375 | 0 | 32 |

As can be seen from Table 1, it was assumed that the curable epoxy compositions for a rotatory electric machine of Examples 1 to 6, which contain the epoxy compound, the acid anhydride-based curing agent, and the amine-based curing accelerator, each of the compositions having a viscosity at 25°C of 3000 mPa·s or less and an adhesive strength of the cured product to PEEK of 2.5 N/cm² or more, can easily adhere to the PEEK resin, can suppress delamination from the PEEK resin during use, and maintain insulating properties. On the other hand, the curable epoxy composition for a rotatory electric machine of Comparative Example 1 had inferior adhesive strength. In addition, the curable epoxy composition for a rotatory electric machine of Comparative Example 2 had sufficient adhesive strength after curing, but had high viscosity, and thus hardly adhere to the PEEK resin, and had inferior handleability and long-term stability.

The components that were used in Examples and Comparative Examples are as follows.

### (Epoxy Compound (A))

CELLOXIDE 2021P: Product name "CELLOXIDE 2021P" (3,4-epoxycyclohexylmethyl(3,4-epoxy)cyclohexanecarboxylate, available from Daicel Corporation
YD128: Product name "YD-128" (poly[2-(chloro-methyl)oxirane-alt-4,4'-(propane-2,2-diyl)diphenol)], available from NIPPON STEEL Chemical & Material Co., Ltd.
E530: Product name "Epiform E-530", available from SOMAR CORPORATION

### (Polyimide Compound)

Voltatex 4200: Product name "Voltatex 4200", available from Axalta Coating Systems Ltd.

### (Acid Anhydride-Based Curing Agent (B))

NMA: Product name "NMA", methylnadic anhydride, available from POLYNT S.p.A
MTHPA: Product name "MTHPA", methyltetrahydrophthalic anhydride, available from RESONAC Corporation

### (Amine-Based Curing Accelerator (C))

1B2MZ: 1-benzyl-2-methylimidazole
HPI: 1-(2-hydroxypropyl)imidazole
U-CAT SA-102: Product name "U-CAT SA-102", available from San-Apro Ltd., 2-ethylhexane salt of 1,8-diazabicyclo[5.4.0]undecene-7
U-CAT SA-1: Product name "U-CAT SA-1", available from San-Apro Ltd., phenol salt of 1,8-diazabicyclo[5.4.0]undecene-7
LC-80: Product name "Technicure LC-80", amine adduct of 2-methylimidazole and bisphenol A type epoxy compound, latent curing accelerator, available from A & C Catalysts, Inc.
LC-100: Product name "Technicure LC-100", available from A & C Catalysts, Inc.

### (Polyester Polyol (D))

Polyol A: aliphatic polyester diol, molecular weight: 2000, hydroxyl value: 56.8 KOHmg/g

Hereinafter, variations of the present disclosure will be described.

### [Appendix 1]

A curable epoxy composition for a rotatory electric machine, the curable epoxy composition containing an epoxy compound (A), an acid anhydride-based curing agent (B), and an amine-based curing accelerator (C),
the curable epoxy composition being liquid at 25°C, and having a viscosity at 25°C of 3000 mPa·s or less and an adhesive strength to PEEK resin of 2.5 N/cm² or more when cured.

### [Appendix 2]

The curable epoxy composition for a rotatory electric machine according to Appendix 1, wherein a viscosity increase rate before and after a storage test performed under conditions of a temperature of 23 ± 5°C and a humidity of 50 ± 5% for 41 days is 20000% or less.

### [Appendix 3]

The curable epoxy composition for a rotatory electric machine according to Appendix 1 or 2, wherein the curable epoxy composition has an adhesive strength to PEEK resin of 2.5 N/cm² or more when cured.

### [Appendix 4]

The curable epoxy composition for a rotatory electric machine according to any one of Appendices 1 to 3, wherein the curable epoxy composition has a glass transition temperature of 170°C or higher when cured.

### [Appendix 5]

The curable epoxy composition for a rotatory electric machine according to any one of Appendices 1 to 4, wherein the curable epoxy composition contains an alicyclic epoxy compound as the epoxy compound (A).

### [Appendix 6]

The curable epoxy composition for a rotatory electric machine according to any one of Appendices 1 to 5, wherein a proportion of a content of the epoxy compound (A) is 10 mass% or more with respect to a total amount (100 mass%) of the curable epoxy composition.

### [Appendix 7]

The curable epoxy composition for a rotatory electric machine according to any one of Appendices 1 to 6, wherein the acid anhydride-based curing agent (B) is an acid anhydride that is liquid at 25°C.

### [Appendix 8]

The curable epoxy composition for a rotatory electric machine according to any one of Appendices 1 to 7, wherein the acid anhydride-based curing agent (B) includes nadic anhydride or a derivative thereof.

### [Appendix 9]

The curable epoxy composition for a rotatory electric machine according to any one of Appendices 1 to 8, wherein the amine-based curing accelerator (C) includes an imidazole-based curing accelerator.

### [Appendix 10]

The curable epoxy composition for a rotatory electric machine according to any one of Appendices 1 to 9, wherein a content of the amine-based curing accelerator (C) is from 0.01 to 5 parts by mass with respect to 100 parts by mass of the total amount of a curable compound contained in the curable epoxy composition.

### [Appendix 11]

The curable epoxy composition for a rotatory electric machine according to any one of Appendices 1 to 10, further containing a polyester polyol (D).

### [Appendix 12]

The curable epoxy composition for a rotatory electric machine according to Appendix 11, wherein the polyester polyol (D) has a molecular weight of from 250 to 100000.

### [Appendix 13]

The curable epoxy composition for a rotatory electric machine according to Appendix 11 or 12, wherein the polyester polyol (D) has a hydroxyl value of 600 KOHmg/g or less.

### [Appendix 14]

The curable epoxy composition for a rotatory electric machine according to any one of Appendices 1 to 13, further containing an inorganic filler (E).

### [Appendix 15]

The curable epoxy composition for a rotatory electric machine according to Appendix 14, wherein the curable epoxy composition contains silica as the inorganic filler (E).

### [Appendix 16]

A cured product of the curable epoxy composition for a rotatory electric machine described in any one of Appendices 1 to 15.

### [Appendix 17]

A stator for a rotatory electric machine, the stator including the cured product described in Appendix 16, and the cured product being formed in a manner covering a stator coil.

### [Appendix 18]

A stator for a rotatory electric machine, the stator including the cured product described in Appendix 16, and the cured product covering a winding of the rotor.

## Claims

1. A curable epoxy composition for a rotatory electric machine, the curable epoxy composition containing an epoxy compound (A), an acid anhydride-based curing agent (B), and an amine-based curing accelerator (C),
the curable epoxy composition being liquid at 25°C, and having a viscosity at 25°C of 3000 mPa·s or less and an adhesive strength to PEEK resin of 2.5 N/cm² or more when cured.

2. The curable epoxy composition for a rotatory electric machine according to claim 1, wherein a viscosity increase rate before and after a storage test performed under conditions of a temperature of 23 ± 5°C and a humidity of 50 ± 5% for 41 days is 20000% or less.

3. The curable epoxy composition for a rotatory electric machine according to claim 1 or 2, wherein the curable epoxy composition has a glass transition temperature of 170°C or higher when cured.

4. A cured product of the curable epoxy composition for a rotatory electric machine described in claim 1 or 2.

5. A stator for a rotatory electric machine, the stator comprising the cured product described in claim 4, and the cured product being formed in a manner covering a stator coil.

6. A rotor for a rotatory electric machine, the rotor comprising the cured product described in claim 4, and the cured product covering a winding of the rotor.
